# EUROPEAN PATENT APPLICATION

(11) **EP 2 768 128 A1**
(43) Date of publication of application: **20.08.2014**
(21) Application number: 13155356.2
(22) Date of filing: 15.02.2013
(51) Int. Cl.: H02M 1/32, H02M 7/483

(54) **Three-level brake chopper and three-level converter**

(71) Applicant: ABB Oy, 00380 Helsinki (FI)
(72) Inventor: Viitanen, Tero, 00380 Helsinki (FI)
(74) Representative: Kolster Oy Ab

(57) **Abstract**

A three-level brake chopper, and a three-level converter which comprises a three-level brake chopper comprising a positive direct current pole (dc+), a negative direct current pole (dc-) and a neutral direct current pole (NP); a first diode (D1) and a second diode (D2) connected in series, wherein the connection point between the first diode and the second diode is connected to the neutral direct current pole (NP); a first semiconductor switch (T1) connected between the positive direct current pole (dc+) and the first diode (D1); a second semiconductor switch (T2) connected between the negative direct current pole (dc-) and the second diode (D2); and a brake resistance (Rbrk) connected to only two points, wherein the brake resistance (Rbrk) is connected between the connection point between the first diode (D1) and the first semiconductor switch (T1) and the connection point between the second diode (D2) and the second semiconductor switch (T2).

## Description

### Field of the invention

The invention relates to a three-level brake chopper and a three-level converter.

### Background of the invention

Brake choppers are commonly used in electric systems, such as frequency converters, for dissipating regenerated energy that cannot be fed back to the supplying network. For example, in a case where a motor supplied by a frequency converter with a DC voltage intermediate circuit is rotated by a load connected to the motor, the motor acts as a generator and feeds power back to the supply. When the rectifying bridge of the frequency converter is not configured to feed the regenerated energy back to the network, the voltage of the intermediate circuit starts to increase. When the voltage of the intermediate circuit has increased to a certain limit, e.g. higher than the nominal voltage of the intermediate circuit, the brake chopper may be activated and used to convert the electrical energy into heat in a brake resistance in order to reduce the voltage of the intermediate circuit. The brake chopper may be used to reduce the voltage until it is within acceptable limits from the nominal voltage.

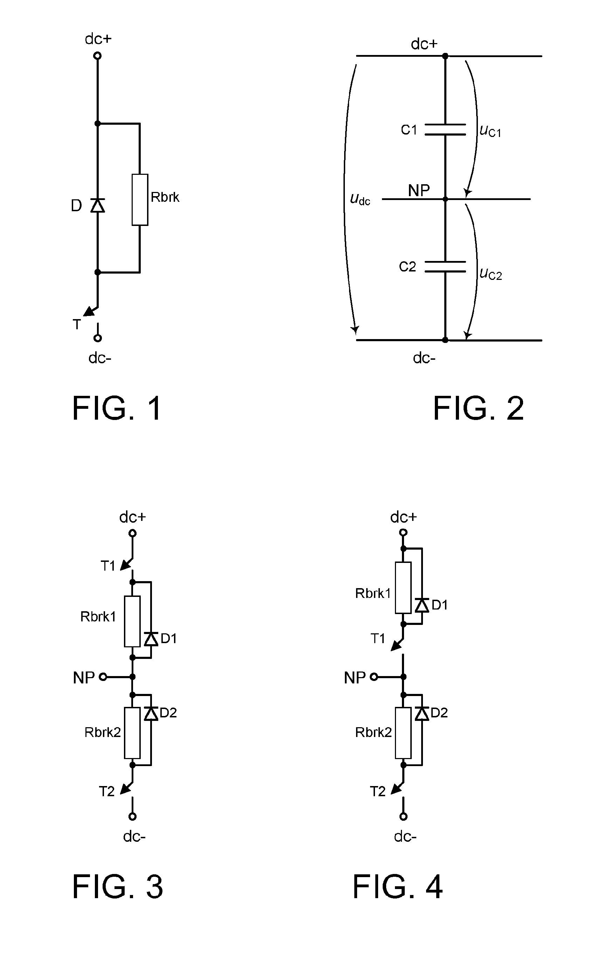

Figure 1 shows a main structure of a typical brake chopper which comprises a brake resistance Rbrk, which may comprise one or more resistors, and a controllable semiconductor switch T with which the current flowing between the DC poles dc+, dc- and through the brake resistance Rbrk can be controlled. The brake chopper further comprises a flyback diode D which may be used to eliminate a possible inductive tail current when the controllable semiconductor switch is switched into a non-conducting state. The operation of the brake chopper may be based for example on pulse width modulation. The simplest solution for the operation of a brake chopper is, however, to keep the brake chopper switched on until the voltage has decreased to an acceptable level.

Three-level devices, such as three-level converters, are devices that have three DC poles. In addition to positive and negative DC poles, they have a neutral DC pole. Figure 2 shows an example of a three level intermediate circuit comprising a positive direct current pole (dc+), a negative direct current pole (dc-) and a neutral direct current pole (NP) and capacitances C1 and C2. The brake chopper of Figure 1 may be used also in connection with three-level devices but it should be noted that the voltage stress of the semiconductors equals to the full DC voltage u_{dc}.

Figures 2 and 3 show examples of possible three-level brake choppers. These examples comprise a separate brake resistance Rbrk1, Rbrk2 for each half u_{C1}, u_{C2} of the intermediate circuit DC voltage u_{dc} and corresponding semiconductors T1, T2, D1, D2. In other words, each half u_{C1}, u_{C2} of the DC voltage u_{dc} has its own circuit corresponding to the example of Figure 1.

A problem related to the above solutions is that they require two separate brake resistances and thus four connecting terminals to connect the brake resistances when each of the two brake resistances Rbrk1, Rbrk2 is connected to two points of the brake chopper circuit. This causes additional costs, requires more space for the system and may cause uncertainty in the installation.

### Brief description of the invention

An object of the invention is to provide an apparatus so as to solve or at least alleviate the above problem. The object of the invention is achieved by a three-level brake chopper and a three-level converter that are characterized by what is stated in the independent claims. Preferred embodiments of the invention are described in the dependent claims.

The invention is based on the idea of connecting a brake resistance only to the connection point between the first diode and the first controllable semiconductor switch and to the connection point between the second diode and the second controllable semiconductor switch of a three-level brake chopper.

The solution of the invention provides the advantage that since only one brake resistance is used which is connected to only two points, only two connecting terminals for connecting the brake resistance are needed in the brake chopper. In addition, the solution of the invention still enables discharge of electrical energy from only one half of the DC intermediate circuit at a time or from the whole DC intermediate circuit.

### Brief description of the figures

The invention will now be explained in greater detail in connection with preferred embodiments and with reference to the attached drawings, in which:
Figure 1 shows an example of a brake chopper according to an embodiment;
Figure 2 shows an example of a three level intermediate circuit according to an embodiment;
Figure 3 shows an example of a three-level brake chopper according to an embodiment;
Figure 4 shows an example of a three-level brake chopper according to an embodiment; and
Figure 5 shows an example of a three-level brake chopper according to an embodiment.

### Detailed description of the invention

The application of the invention is not restricted to any specific system, but it may be applied to various electric systems. In addition, the use of the invention is not restricted to any system utilizing a specific basic frequency or to any specific voltage level.

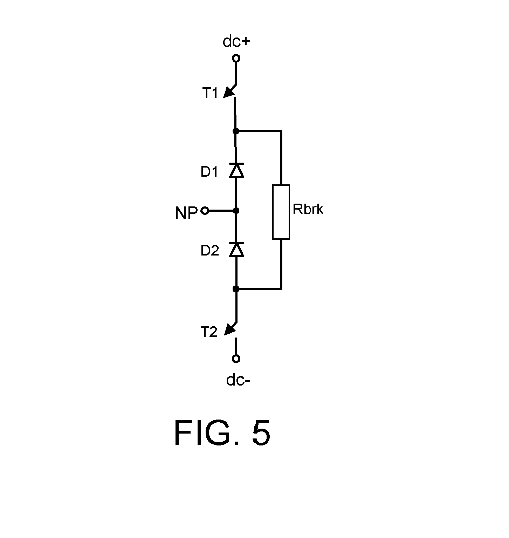

Figure 5 shows an example of a main circuit of a three-level brake chopper according to an embodiment. It should be noted that the figure only shows elements essential to the understanding of the invention. The brake chopper of Figure 5 has a positive direct current pole dc+, a negative direct current pole dc- and a neutral direct current pole NP. The brake chopper can be connected to a DC voltage intermediate circuit of a three-level converter device via these poles, for example. The brake chopper of Figure 5 further comprises a first diode D1 and a second diode D2 connected in series such that an anode of the first diode D1 is connected to a cathode of the second diode D2, wherein the connection point between the first diode D1 and the second diode D2 is connected to the neutral direct current pole (NP). In addition, the brake chopper of Figure 5 comprises a first controllable semiconductor switch T1 and a second controllable semiconductor switch T2. For the sake of clarity, Figure 5 does not show possible control arrangements for the semiconductor switches. The first controllable semiconductor switch T1 is connected between the positive direct current pole dc+ and a cathode of the first diode D1. A collector or a drain of the first controllable semiconductor switch T1, depending on the type of the semiconductor switch, is preferably connected to the positive direct current pole dc+, and an emitter or a source of the first controllable semiconductor switch T1, again depending on the type of the semiconductor switch, is preferably connected to the cathode of the first diode D1.

The second controllable semiconductor switch T2 is connected between the negative direct current pole dc- and an anode of the second diode D2. A collector or a drain of the second controllable semiconductor switch T2, depending on the type of the semiconductor switch, is preferably connected to the anode of the second diode D2, and an emitter or a source of the second controllable semiconductor switch T2, again depending on the type of the semiconductor switch, is preferably connected to the negative direct current pole dc-. The controllable semiconductor switches T1 and T2 can be IGBTs (Insulated Gate Bipolar Transistor) or FETs (Field-Effect Transistor), for example, or any suitable semiconductor switches. The brake chopper of Figure 5 also comprises a brake resistance Rbrk connected to only two points. The term 'point' here generally refers to a point in the brake chopper circuit where an essentially direct electrical connection from the brake resistance Rbrk can be established. One point of said two points is the connection point between the first diode D1 and the first controllable semiconductor switch T1, i.e. the source/emitter of the first controllable semiconductor switch T1 and the cathode of the first diode D1, where one terminal of the brake resistance Rbrk is connected to. The other point of said two points is the connection point between the second diode D2 and the second controllable semiconductor switch T2, i.e. the drain/collector of the second controllable semiconductor switch T2 and the anode of the second diode D2, where the other terminal of the brake resistance Rbrk is connected to. Thus, the brake resistance Rbrk is connected between the connection point between the first diode D1 and the first controllable semiconductor switch T1 and the connection point between the second diode D2 and the second controllable semiconductor switch T2.

According to an embodiment, the brake resistance Rbrk may consist of only one resistor. Alternatively, the brake resistance Rbrk may consist of two or more resistors connected in series and/or in parallel with each other. According to an embodiment, the first controllable semiconductor switch T1 and the first diode D1 reside in a first semiconductor module, and the second controllable semiconductor switch T2 and the second diode D2 reside in a second semiconductor module. In this context, the term 'semiconductor module' generally refers to a module that comprises several semiconductor elements arranged on a common substrate and connected electrically to each other in a suitable manner. By means of such a semiconductor module structure the brake chopper structure of Figure 5 is easy to implement.

According to an embodiment, a three-level converter, such as an NPC (Neutral-Point-Clamped) converter or an ANPC (Active Neutral-Point-Clamped) converter, can be complemented by connecting a three-level brake chopper according to any embodiment described above thereto. The three-level brake chopper can be connected to the three-level converter by connecting the positive direct current poles Udc+ of the three-level brake chopper and the three-level converter together, the negative direct current poles Udc- of the three-level brake chopper and the three-level converter together, and the neutral direct current poles NP of the three-level brake chopper and the three-level converter together.

According to an embodiment, a three-level brake chopper according to any one of the embodiments described above can be used to discharge electrical energy from only one half, C1 or C2, of the DC voltage intermediate circuit at a time, or from both halves, C1+C2, at the same time. For example, by controlling only the first controllable semiconductor switch T1 to be conductive, a current runs from the positive direct current pole dc+ to the neutral direct current pole NP through the first controllable semiconductor switch T1, the brake resistance Rbrk and the second diode D2. Thus, energy from the first half C1 of the DC voltage intermediate circuit is discharged. On the other hand, by controlling only the second controllable semiconductor switch T2 to be conductive, a current runs from the neutral direct current pole NP to the negative direct current pole dc- through the first diode D1, the brake resistance Rbrk and the second controllable semiconductor switch T2. Thus, energy from the second half C2 of the DC voltage intermediate circuit is discharged. Further, by controlling both the first controllable semiconductor switch T1 and the second controllable semiconductor switch T2 to be conductive, a current runs from the positive direct current pole dc+ to the negative direct current pole dc- through the first controllable semiconductor switch T1, the brake resistance Rbrk and the second controllable semiconductor switch T2. Thus, energy is discharged from the whole DC voltage intermediate circuit. The control of the semiconductor switches T1, T2 according to the various embodiments described above can be performed by or via a suitable control arrangement (not shown in the figures).

It is obvious to a person skilled in the art that, as technology advances, the basic idea of the invention may be implemented in various ways. The invention and its embodiments are thus not restricted to the above examples but may vary within the scope of the claims.

## Claims

1. A three-level brake chopper, comprising:
a positive direct current pole (dc+), a negative direct current pole (dc-) and a neutral direct current pole (NP);
a first diode (D1) and a second diode (D2) connected in series such that an anode of the first diode is connected to a cathode of the second diode, wherein the connection point between the first diode and the second diode is connected to the neutral direct current pole (NP);
a first controllable semiconductor switch (T1) connected between the positive direct current pole (dc+) and a cathode of the first diode (D1);
a second controllable semiconductor switch (T2) connected between the negative direct current pole (dc-) and an anode of the second diode (D2); and
a brake resistance (Rbrk) connected to only two points, **characterised in that**
the brake resistance (Rbrk) is connected between the connection point between the first diode (D1) and the first controllable semiconductor switch (T1) and the connection point between the second diode (D2) and the second controllable semiconductor switch (T2).

2. A three-level brake chopper according to claim 1, **characterised in that** the brake resistance (Rbrk) comprises one resistor.

3. A three-level brake chopper according to claim 1, **characterised in that** the brake resistance (Rbrk) comprises more than one resistor connected in series and/or in parallel with each other.

4. A three-level brake chopper according to claim 1, 2 or 3, **characterised in that**
the first controllable semiconductor switch (T1) and the first diode (D1) reside in a first semiconductor module; and
the second controllable semiconductor switch (T2) and the second diode (D2) reside in a second semiconductor module.

5. A three-level converter, which comprises a three-level brake chopper according to any one of claims 1 to 4.
